# EUROPÄISCHE PATENTSCHRIFT

(11) **EP 0 768 213 B1**
(45) Veröffentlichungstag und Bekanntmachung des Hinweises auf die Patenterteilung: **31.10.2001**
(21) Anmeldenummer: 96113356.8
(22) Anmeldetag: 21.08.1996
(51) Int. Cl.: B60R 19/26, F16B 41/00

(54) **Stossfänger für ein Kraftfahrzeug**
Bumper for a motor vehicle
Pare-choc pour un véhicule automobile

(30) Priorität: 12.10.1995 DE 19537938
(43) Veröffentlichungstag der Anmeldung: 16.04.1997
(73) Patentinhaber: Bayerische Motoren Werke Aktiengesellschaft, 80788 München (DE)
(72) Erfinder: Mayr, Egon, 8104 Tegernbach (DE)

(56) Entgegenhaltungen:
- WO-A-84/03757
- DE-A- 2 034 680
- DE-A- 2 226 966
- DE-A- 3 509 490
- DE-A- 4 136 362
- DE-U- 8 900 523
- US-A- 5 410 114
- PATENT ABSTRACTS OF JAPAN vol. 009, no. 117 (M-381), 22. Mai 1985 & JP 60 004444 A (HONDA GIKEN KOGYO KK), 10. Januar 1985

## Beschreibung

Die Erfindung bezieht sich auf einen Stoßfänger der im Oberbegriff des Patentanspruchs 1 genannten und als bekannt vorausgesetzten Art.

Der bekannte Stoßfänger wird von zwei, im Abstand voneinander liegenden Stoßdämpfern gehalten, die ihrerseits am Fahrzeugaufbau befestigt sind. Dabei ist am freien Endbereich der Stoßdämpfer-Kolbenstangen jeweils eine lotrecht verlaufende Aufnahmehülse befestigt, an welcher der einen etwa U-förmigen Querschnitt aufweisende Stoßfänger angeschraubt ist. Zur Montage wird der Stoßfänger mit seinen gegenüberliegenden Schenkeln auf die Aufnahmehülsen aufgeschoben und die Befestigungsschrauben von unten unter Durchsetzung der Durchgangsbohrung des Stoßfängers und der Aufnahmehülsen eingeführt. Schließlich werden die Befestigungsschrauben jeweils in eine an der Oberseite des Stoßfängers festgelegte Mutter eingeschraubt. Falls jedoch ein sich von der Unterseite des Stoßfängers weit nach unten erstreckendes Verkleidungsteil oder dergleichen vorhanden ist, kann die Befestigungsschraube nur sehr mühsam und mit erheblichem Zeitaufwand eingesetzt werden.

Aufgabe der Erfindung ist es daher, bei einem Stoßfänger der im Oberbegriff des Patentanspruchs 1 genannten Art eine Einrichtung zu schaffen, durch die der Stoßfänger und der Stoßdämpfer auch bei schlecht zugänglicher Verschraubbarkeit, beispielsweise wegen einer vorhandenen Verkleidung, rasch und störungsfrei miteinander verschraubt werden können.

Zur Lösung der Aufgabe sind die im Patentanspruch 1 dargelegten Merkmale vorgesehen.

Da die erfindungsgemäße Halteeinrichtung in einem Abstand zum Stoßfänger mindestens eine radial federnde Haltenase aufweist, liegt diese beim Einführen der Befestigungsschraube an deren Schaft oder Kopf federnd an, so daß die Befestigungsschraube weitgehend fluchtend zu den Durchgangsbohrungen von Stoßfänger und Aufnahmehülse positioniert und dabei reibschlüssig gehalten ist.

Eine absolut zuverlässige Aufnahme der Befestigungsschraube ist durch eine Halteeinrichtung mit mehreren, im Winkelabstand voneinander angeordneten Haltenasen gewährleistet, die so angeordnet sind, daß sie den Kopf der Befestigungsschraube nach dessen Durchführung - wobei die Haltenasen kurzzeitig radial zurückfedern - untergreifen (Merkmale des Patentanspruchs 2).

Durch die gemäß den Merkmalen des Patentanspruchs 3 an der Halteeinrichtung im Bereich des Stoßfängers vorgesehene, im Winkelabstand voneinander liegende Zentrierabschnitte, die in radialer Richtung federn und zum Stoßfänger hin konvergierend verlaufen, wird die Befestigungsschraube über den Schraubenkopf exakt koaxial in bezug auf die am Stoßfänger festgelegte Mutter positioniert.

Durch einen sich an die Haltenasen axial nach außen anschließenden, trichterförmigen Einführabschnitt ist auch bei einer schrägen Einführung der Befestigungsschraube in bezug auf die Durchgangsbohrung der Aufnahmehülse stets eine zentrische Aufnahme der Befestigungsschraube im Bereich der Haltenasen gewährleistet (Merkmal des Patentanspruchs 4).

Die Halteeinrichtung besteht zweckmäßigerweise aus Kunststoff oder aus Stahlblech. Dabei ist eine aus Kunststoff bestehende Halteeinrichtung hülsenartig gestaltet und kann am Verkleidungsteil des Stoßfängers auch einstückig ausgebildet werden. Eine aus Stahlblech bestehende Halteeinrichtung ist dagegen als ein im Querschnitt etwa U-förmiges Blechteil gestaltet und wird am Stoßfänger durch Befestigungsschrauben oder dergleichen angebracht. Ferner hat eine aus Stahlblech bestehende Halteeinrichtung an den Eckbereichen des Einführabschnitts nach unten abstehende Fortsätze, so daß auch hierbei der Schraubenkopf zuverlässig nach oben verlagerbar ist. Bei einer aus Blech bestehenden Halteeinrichtung können natürlich auch die Haltenasen und Zentrierabschnitte einstückig am Blechteil ausgebildet werden (Merkmale der Patentansprüche 5 und 6).

Damit die Befestigungsschraube auch noch innerhalb der Halteeinrichtung gedreht und der Schraubenkopf bis zum Stoßfänger verlagert werden kann, weist sie ein axial vom Schraubenkopf abstehendes Endteil mit einer Dreheinrichtung (Innensechskant oder dergleichen) auf (Merkmale des Patentanspruchs 7).

Ein Ausführungsbeispiel der Erfindung ist in der Zeichnung dargestellt und wird im folgenden erläutert. Es zeigt:
- Figur 1: eine sich an einem Stoßfänger befindende Halteeinrichtung und ein an diesem vorgesehenes Verkleidungsteil,
- Figur 2: eine Einzelansicht der Halteeinrichtung in Draufsicht,
- Figur 3: einen Schnitt längs der Linie III-III in Figur 2,
- Figur 4: einen Schnitt längs der Linie IV-IV in Figur 2.

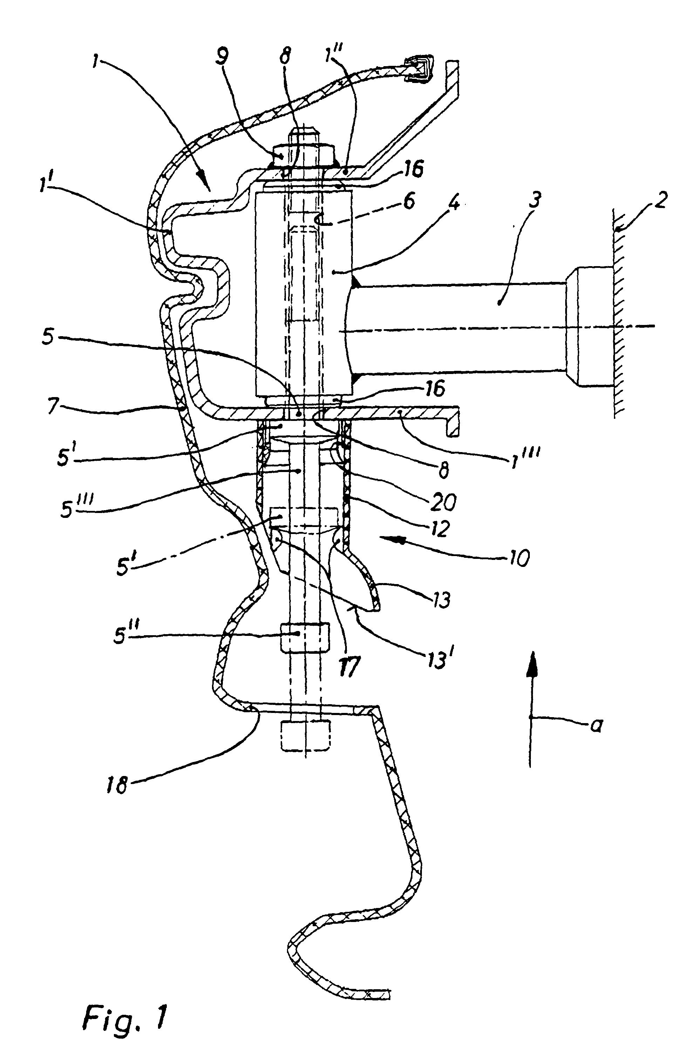

Der in Figur 1 dargestellte Stoßfänger 1 weist ein Mittelteil 1' auf, das von zwei, im Abstand voneinander liegenden,am Bug- und/oder Heckbereich eines Personenkraftwagens - dessen Fahrzeugaufbau mit 2 bezeichnet ist - angebrachten hydraulischen Stoßdämpfern 3 getragen wird. Dabei ist am freien Ende eines jeden Stoßdämpfers 3 eine rechtwinklig zu seiner Längsachse sowie senkrecht verlaufende Aufnahmehülse 4 angeschweißt. Diese hat zum Durchführen einer Befestigungsschraube 5 eine Durchgangsbohrung 6.

Das einen U-förmigen Querschnitt aufweisende Mittelteil 1' des Stoßfängers 1 erstreckt sich über die Breite des Personenkraftwagens. Dabei hat der obenliegende Schenkel 1" und der untenliegende Schenkel 1''' des Mittelteils 1' des Stoßfängers 1 jeweils eine zum Durchführen der Befestigungsschraube 5 dienende Durchgangsbohrung 8, wobei am obenliegenden Schenkel 1" jeweils eine Mutter 9 koaxial zur Durchgangsbohrung 8 durch Schweißen oder dergleichen befestigt ist. Zum Anbringen des Mittelteils 1' des Stoßfängers 1 an den Aufnahmehülsen 4 wird an deren Stirnseiten der obenliegende und der untenliegende Schenkel 1", 1''' unter Zwischenlage jeweils einer Beilagscheibe 16 angeordnet, wobei die Durchgangsbohrungen 8 koaxial zur Durchgangsbohrung 6 der Aufnahmehülsen 4 verlaufen. Schließlich wird in die Durchgangsbohrungen 8 des Stoßfängers 1 und in die Durchgangsbohrung 6 der Aufnahmehülsen 4 die Befestigungsschraube 5 eingeführt.

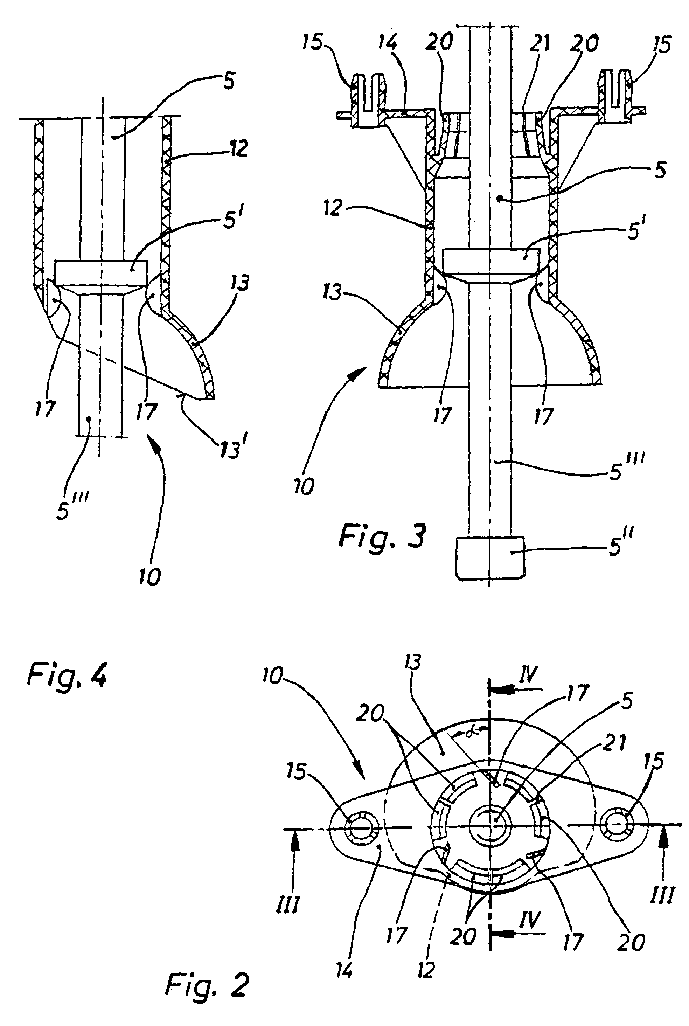

Nachdem der Stoßfänger 1 von einer Verkleidung 7 überdeckt ist, die sich ferner vom untenliegenden Schenkel 1"' des Stoßfängers 1 relativ weit nach unten erstreckt, ist am untenliegenden Schenkel 1''' der Bereich der Durchgangsbohrung 8 außerhalb der Verkleidung 7 nicht sichtbar und daher die Befestigungsschraube 5 rasch nur durch eine Hilfseinrichtung in die Durchgangsbohrungen 6 und 8 einführbar. Aufgrund dessen ist im Bereich der Aufnahmehülsen 4 sowie am untenliegenden Schenkel 1''' des Stoßfängers 1 jeweils eine Halteeinrichtung 10 angebracht, die nach unten absteht. Die in den Figur 2 bis 4 in Einzelansicht dargestellte Halteeinrichtung 10 besteht aus einem rohrförmigen Führungsabschnitt 12 und einem sich nach außen anschließenden, trichterartigen Einführabschnitt 13. Zur Befestigung der Halteeinrichtung 10 am untenliegenden Schenkel 1''' des Stoßdämpfers 1 ist am Führungsabschnitt 12 ein Befestigungsflansch 14 ausgebildet. Von diesem stehen an seinen beiden gegenüberliegenden Endbereichen jeweils mehrere, dübelartige Fortsätze 15 nach oben ab, über welche die Halteeinrichtung 10 durch Einschlagen jeweils eines Spreitzdomes am untenliegenden Schenkel 1''' des Stoßfängers 1 befestigt wird. Natürlich kann die Halteeinrichtung 10 auch durch Schrauben am Stoßfänger 1 befestigt werden.

Wie die Figuren 1 bis 4 zeigen, weist die Halteeinrichtung 10 am Übergangsbereich vom Führungsabschnitt 12 zum Einführabschnitt 1 - also in einem Abstand zum untenliegenden Schenkel 1''' des Stoßfängers 1 - innenseitig drei, in gleich großem Winkelabstand voneinander angeordnete Haltenasen 17 auf. Diese verlaufen in einem Winkel α von etwa 45° (Figur 2) und damit schräg zur Mittelachse des Führungsabschnitts 12. Hierdurch ist gewährleistet, daß die Haltenasen 17 in bezug auf die Wandung des Führungsabschnitts 12 bei einer radial wirkenden Druckbelastung durch den Kopf 5' der Befestigungsschraube 5 - wie im folgenden erläutert wird - radial federn.

In Figur 1 ist zu ersehen, daß die Verkleidung 7 an ihrem untenliegenden Endbereich eine koaxial zur Durchgangsöffnung 6 der Aufnahmehülse 4 verlaufende Wandöffnung 18 aufweist. Über diese wird der Schaft der Befestigungsschraube 5 sowie deren Kopf 5' etwa lotrecht von unten in Pfeilrichtung a hindurchgeführt und in die Durchgangsbohrungen 8 und 6 des Stoßfängers 1 bzw. der Aufnahmehülse 4 eingeführt. Bei weiterem Verlagern der Befestigungsschraube 5 in Pfeilrichtung a liegen schließlich die Haltenasen 17 federnd am Kopf 5' der Befestigungsschraube 5 an, so daß diese reibschlüssig gehalten und koaxial zur Durchgangsbohrung 6 der Aufnahmehülse 4 aufgenommen ist. Bei weiterem Verlagern der Befestigungsschraube 5 in Pfeilrichtung a untergreifen schließlich die Haltenasen 17 den Kopf 5' der Befestigungsschraube 5, wodurch diese nicht mehr nach unten fallen kann. Durch den an der Halteeinrichtung 10 vorgesehenen, nach unten abstehenden Einführabschnitt 13 kann die Befestigungsschraube 5 auch bei einer schrägen Anordnung im Bereich des Einführabschnitts 13 zuverlässig zentrierend in den Führungsabschnitt 12 eingeführt werden.

Wie in Figur 3 ersichtlich, sind am Führungsabschnitt 12 der Halteeinrichtung 10 innenseitig sowie nahe am Befestigungsflansch 14 drei, in gleich großem Winkelabstand voneinander angeordnete und jeweils zwischen den Haltenasen 17 liegende Zentrierabschnitte 20 ausgebildet. Diese stehen von der Innenwandung des Führungsabschnitt 12 ab und verlaufen konvergierend zum Befestigungsflansch 14 hin. Dabei federn die Zentrierabschnitte 20 in radialer Richtung des Führungsabschnitts 12. In Figur 2 ist zu ersehen, daß im Mittelbereich der peripheren Erstreckung der Zentrierabschnitte 20 jeweils ein Längsschlitz 21 vorgesehen und damit eine optimale radiale Federung der Zentrierabschnitte 20 gewährleistet ist. Diese liegen bei einem weiteren Verlagern des Kopfes 5' der Befestigungsschraube 5 zum untenliegenden Schenkel 1''' des Stoßfängers 1 hin federnd am Schraubenkopf 5' an, so daß die Befestigungsschraube 5 mit dem an ihrem freien Endabschnitt vorgesehenen Außengewinde exakt koaxial in bezug auf das Innengewinde der Mutter 9 positioniert ist und schließlich in diese eingeschraubt werden kann. Damit die Befestigungsschraube 5 im Bereich der Wandöffnung 18 der Verkleidung 7 durch eine Schraubeinrichtung gedreht werden kann, weist sie eine Dreheinrichtung 5" mit einem Innensechskant oder dergleichen auf. Diese befindet sich an einem koaxial zum Schraubenschaft verlaufenden und vom Schraubenkopf 5' abstehenden Endteil 5'''. Schließlich ist in Figur 1 zu ersehen, daß der untere Rand 13' des Einführabschnitts 13 der Halteeinrichtung 10 schräg zur Rotationsachse des Führungsabschnitts 12 verläuft, wodurch der Einführabschnitt 13 nicht an der Verkleidung 7 anliegt. Die im vorliegenden Ausführungsbeispiel aus Kunststoff bestehende Halteeinrichtung 10 wird, wie erwähnt, durch die dübelartigen Fortsätze 15 am Stoßfänger 1 befestigt. Es kann jedoch auch eine aus Kunststoff bestehende Halteeinrichtung 10 einstückig an einer Verkleidung 7 vorgesehen sein.

## Patentansprüche

1. Stoßfänger für ein Kraftfahrzeug, mit wenigstens zwei, am Fahrzeugaufbau befestigten Stoßdämpfern, von denen jeder an seinem freien Endbereich mit einer Aufnahmehülse versehen ist, an der der Stoßfänger über eine Befestigungsschraube angebracht ist, **dadurch gekennzeichnet, daß** im Bereich der Aufnahmehülsen (4) jeweils eine vom Stoßfänger (1) nach unten abstehende Halteeinrichtung (10) vorgesehen ist, die mit Abstand zum Stoßfänger mindestens eine radial federnde Haltenase (17) aufweist, welche beim Einführen der Befestigungsschraube (5) in die Aufnahmehülse federnd an der Befestigungsschraube oder an deren Kopf (5') anliegt.

2. Stoßfänger nach Anspruch 1, **dadurch gekennzeichnet, daß** die Halteeinrichtung (10) mehrere, im Winkelabstand voneinander angeordnete Haltenasen (17) aufweist, die in Ruhelage den Kopf (5') der Befestigungsschraube (5) untergreifen.

3. Stoßfänger nach Anspruch 1, **dadurch gekennzeichnet, daß** die Halteeinrichtung (10) im Bereich des Stoßfängers (1) mehrere, im Winkelabstand voneinander angeordnete, den Schraubenkopf (5') aufnehmende Zentrierabschnitte (20) aufweist, die in radialer Richtung federn und zum Stoßfänger hin konvergierend verlaufen.

4. Stoßfänger nach Anspruch 3, **dadurch gekennzeichnet, daß** die Halteeinrichtung (10) einen sich an die Haltenasen (17) nach außen anschließenden, trichterartigen Einführabschnitt (13) aufweist.

5. Stoßfänger nach Anspruch 3, **dadurch gekennzeichnet, daß** die aus Kunststoff oder aus Stahlblech bestehende Halteeinrichtung (10) als eine Hülse bzw. als ein im Querschnitt etwa U-förmiges Blechteil ausgebildet ist.

6. Stoßfänger nach Anspruch 5, **dadurch gekennzeichnet, daß** eine aus Kunststoff bestehende Halteeinrichtung (10) einstückig an einer Verkleidung (7) des Stoßfängers (1) ausgebildet ist.

7. Stoßfänger nach Anspruch 1, **dadurch gekennzeichnet, daß** vom Kopf (5') der Befestigungsschraube (5) axial ein Endteil (5"') absteht, an dem eine Dreheinrichtung (5") mit beispielsweise einem Innensechskant vorgesehen ist.

## Claims

1. A motor-vehicle bumper comprising at least two shock-absorbers fastened to the vehicle body, the free end region of each shock-absorber being provided with a receiving sleeve to which the shock-absorber is attached by a screw, **characterised in that** in the region of each receiving sleeve (4) a retaining device (10) projects downwards from the bumper (1) and, at a distance from the bumper, has at least one radially resilient retaining lug (17) which resiliently abuts the fastening screw (5) or the head (5') thereof when the screw is inserted into the receiving sleeve.

2. A bumper according to claim 1, **characterised in that** the retaining device (10) has a number of angularly spaced retaining lugs (17) which in the inoperative position extend under the head (5') of the screw (5).

3. A bumper according to claim 1, **characterised in that** in the region of the bumper (1) the retaining device (10) has a number of angularly spaced centring portions (20) which receive the screw head (5') and are resilient in the radial direction and extend and converge towards the bumper.

4. A bumper according to claim 3, **characterised in that** the retaining device (10) has a funnel-shaped insertion portion (13) outside and adjoining the retaining lugs (17).

5. A bumper according to claim 3, **characterised in that** the retaining device (10), made of plastic or of sheet steel, is in the form of a sleeve or an approximately U-section sheet-metal part.

6. A bumper according to claim 5, **characterised in that** a plastic retaining device (10) is integrally formed on a covering (7) of the bumper (1).

7. A bumper according to claim 1, **characterised in that** an end part (5''') projects axially from the head (5') of the fastening screw (5) and a rotation means (5") formed with at least one internal hexagon is provided on the end part (5''').

## Revendications

1. Pare-chocs pour un véhicule automobile, avec au moins deux amortisseurs de chocs fixés sur le châssis du véhicule, dont l'extrémité libre de chacun d'entre eux comporte un tube récepteur auquel est raccordé le pare-choc, par l'intermédiaire d'une vis de fixation,
**caractérisé en ce que**
dans la zone des tubes récepteurs (4), est monté chaque fois un dispositif de retenue (10) s'écartant vers le bas du pare-choc (1), et comportant à une certaine distance du pare-choc au moins un nez de retenue (17), élastique radialement qui, à l'introduction de vis de fixation (5) dans les tubes récepteurs (4), s'appuie d'une façon élastique sur les vis de fixation ou sur leur tête (5').

2. Pare-choc selon la revendication 1,
**caractérisé en ce que**
le dispositif de retenue (10) comporte plusieurs nez de retenue (17) disposés suivant un certain écart angulaire l'un de l'autre, qui, en position de repos, soutiennent la tête (5') de la vis de fixation (5).

3. Pare-choc selon la revendication 1,
**caractérisé en ce que**
le dispositif de retenue (10) comporte au niveau du pare-choc (1) plusieurs éléments de centrage (20) disposés suivant un certain écart angulaire l'un de l'autre, supportant la tête de vis (5'), élastiques radialement et se développant de façon convergente vers le pare-choc.

4. Pare-choc selon la revendication 3,
**caractérisé en ce que**
le dispositif de retenue (10) comporte une section d'introduction (13) en forme d'entonnoir faisant suite aux nez de retenue (17) vers l'extérieur.

5. Pare-choc selon la revendication 3,
**caractérisé en ce que**
le dispositif de retenue (10), en plastique ou en métal, est constituée par un tube ou une pièce de tôle de section approximative en forme de U.

6. Pare-choc selon la revendication 5,
**caractérisé en ce qu'**
un dispositif de retenue (10) en plastique est formé d'une seule pièce sur un habillage (7) du pare-choc (1).

7. Pare-choc selon la revendication 1,
**caractérisé en ce que**
la tête (5') de la vis de fixation (5) se prolonge axialement par une partie terminale (5"') comportant un dispositif de rotation (5") avec, par exemple, une surface intérieure à six pans.
